# EUROPEAN PATENT APPLICATION

(11) **EP 4 825 917 A1**
(43) Date of publication of application: **21.10.2026**
(21) Application number: 24903729.2
(22) Date of filing: 11.12.2024
(51) Int. Cl.: C08L 33/04, C08F 2/30, C08F 20/10

(54) **RUBBER COMPOSITION, CROSSLINKED PRODUCT THEREOF, AND METHOD FOR PRODUCING ACRYLIC RUBBER**

(30) Priority: 14.12.2023 JP 2023211326; 05.04.2024 JP 2024061391
(71) Applicant: Denka Company Limited, Tokyo 103-8338 (JP)
(72) Inventor: MASUKO, Kazunori, Tokyo 103-8338 (JP); MIYAUCHI, Toshiaki, Tokyo 103-8338 (JP)
(74) Representative: Hoffmann Eitle
(86) International application number: PCT/JP2024/043880
(87) International publication number: WO 2025/127076

(57) **Abstract**

Provided is a rubber composition containing acrylic rubber and a nonionic emulsifier, wherein more than 0 mass% and 80 mass% or less of the total mass of the nonionic emulsifier is bound to the acrylic rubber.

## Description

### TECHNICAL FIELD

The present invention relates to a rubber composition, a crosslinked product thereof, and a method for producing acrylic rubber.

### BACKGROUND

Acrylic rubber and a crosslinked product thereof have excellent physical properties, such as heat resistance, oil resistance, and mechanical properties, and are therefore used, for example, as materials for hoses and sealing parts in an automobile engine room. For example, Patent Document 1 discloses acrylic rubber that includes, as monomer units, an alkyl acrylate and a crosslink-site monomer, wherein the content of a nonionic emulsifier in the acrylic rubber is 0.5-2 mass%.

### CITATION LIST

### PATENT LITERATURE

Patent Document 1: WO 2021/075128 A

### SUMMARY OF THE INVENTION

### TECHNICAL PROBLEM

As disclosed in Patent Document 1, studies have been conducted focusing on the content of a nonionic emulsifier coexisting with acrylic rubber. However, according to studies by the present inventors, even when the nonionic emulsifier coexisting with acrylic rubber has the same content, water resistance and tensile strength at break of a crosslinked product of the acrylic rubber may vary, and in some cases the water resistance or the tensile strength at break may deteriorate.

Accordingly, one aspect of the present invention aims to achieve both water resistance and tensile strength at break of a crosslinked product of acrylic rubber.

### SOLUTION TO PROBLEM

The present inventors have found that, even when collectively referred to as a nonionic emulsifier coexisting with acrylic rubber, there may exist: a nonionic emulsifier that is bound to acrylic rubber and is relatively unlikely to be detached therefrom; and a nonionic emulsifier that is not bound to acrylic rubber and is relatively likely to be detached therefrom.

The inventors have also found that, even when the same total amount of a nonionic emulsifier is allowed to coexist with acrylic rubber having the same monomer composition, tensile strength at break of a crosslinked product of the acrylic rubber decreases when no nonionic emulsifier bound to the acrylic rubber is present (i.e., only nonionic emulsifier unbound to the acrylic rubber is present), whereas water resistance of the crosslinked product of the acrylic rubber deteriorates when the nonionic emulsifier bound to the acrylic rubber is present in an amount exceeding a required amount. Therefore, in order to achieve both water resistance and tensile strength at break of a crosslinked product of acrylic rubber (i.e., to prevent a decrease or deterioration in either one) when the same total amount of nonionic emulsifier is allowed to coexist with acrylic rubber having the same monomer composition, it is important that the proportion of the nonionic emulsifier bound to the acrylic rubber be within a specific range.

The present invention includes the following aspects.
[1] A rubber composition comprising acrylic rubber and a nonionic emulsifier, wherein more than 0 mass% and 80 mass% or less of the total mass of the nonionic emulsifier is bound to the acrylic rubber.
[2] The rubber composition according to [1], wherein the total mass of the nonionic emulsifier is 5 parts by mass or less based on 100 parts by mass of the total mass of the acrylic rubber.
[3] The rubber composition according to [1] or [2], wherein the acrylic rubber includes at least one monomer unit selected from the group consisting of an alkyl acrylate, an alkyl methacrylate, and an alkoxyalkyl acrylate.
[4] The rubber composition according to any one of [1] to [3], further comprising a crosslinking agent.
[5] A crosslinked product of the rubber composition according to any one of [1] to [4].
[6] A method for producing acrylic rubber, the method comprising: obtaining a latex of an acrylic polymer by polymerizing an acrylic monomer in the presence of a nonionic emulsifier; and
   coagulating the acrylic polymer and washing to obtain acrylic rubber, wherein more than 0 mass% and 70 mass% or less of the total mass of the nonionic emulsifier in the latex is bound to the acrylic polymer.
[7] The method for producing acrylic rubber according to [6], wherein the total mass of the nonionic emulsifier in the latex is 6 parts by mass or less based on 100 parts by mass of the total mass of the acrylic polymer.
[8] The method for producing acrylic rubber according to [6] or [7], wherein the acrylic rubber includes at least one monomer unit selected from the group consisting of an alkyl acrylate, an alkyl methacrylate, and an alkoxyalkyl acrylate.

### EFFECTS OF THE INVENTION

According to one aspect of the present invention, both water resistance and tensile strength at break of a crosslinked product of acrylic rubber can be achieved.

According to another aspect of the present invention, a toluene-insoluble fraction of acrylic rubber can be reduced. According to another aspect of the present invention, flex fatigue resistance of a crosslinked product of acrylic rubber can be improved. According to another aspect of the present invention, copper resistance of a crosslinked product of acrylic rubber can be improved.

### DESCRIPTION OF EMBODIMENTS

One embodiment of the present invention is a method for producing acrylic rubber, comprising the steps of: polymerizing an acrylic monomer in the presence of a nonionic emulsifier to obtain a latex of the acrylic polymer (hereinafter referred to as "step S1"); and coagulating the acrylic polymer and washing the coagulated acrylic polymer to obtain the acrylic rubber (hereinafter referred to as "step S2").

In step S1, for example, a monomer mixture liquid containing an acrylic monomer and a polymerization initiator are added to a suspension of a nonionic emulsifier to polymerize the acrylic monomer. Thus, a latex in which an acrylic polymer is dispersed in water is obtained.

The acrylic monomer may include at least one monomer selected from the group consisting of an alkyl acrylate, an alkyl methacrylate, and an alkoxyalkyl acrylate.

The alkyl acrylate is represented by the following formula (1): 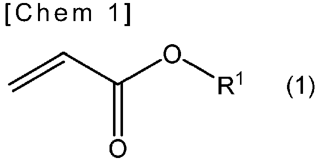 wherein R¹ represents an alkyl group.

The alkyl group (R¹) in the alkyl acrylate may be linear or branched. The number of carbon atoms of the alkyl group (R¹) in the alkyl acrylate may be 1 or more and may be 16 or less. Specific examples of the alkyl acrylate include methyl acrylate, ethyl acrylate, n-propyl acrylate, isopropyl acrylate, n-butyl acrylate, isobutyl acrylate, n-pentyl acrylate, isoamyl acrylate, n-hexyl acrylate, 2-methylpentyl acrylate, n-octyl acrylate, 2-ethylhexyl acrylate, lauryl acrylate, hexadecyl acrylate, 1-adamantyl acrylate, and cyclohexyl acrylate. These alkyl acrylates may be used alone or in combination of two or more thereof.

The content of the alkyl acrylate, based on the total mass of the acrylic monomer, may be 40 mass% or more, 50 mass% or more, or 60 mass% or more, and may be 99 mass% or less, 95 mass% or less, or 90 mass% or less.

The alkyl acrylate may include an alkyl acrylate having an alkyl group with 3 or fewer carbon atoms (i.e., R¹ is an alkyl group having 3 or fewer carbon atoms) (first alkyl acrylate), and an alkyl acrylate having an alkyl group with 4 or more carbon atoms (i.e., R¹ is an alkyl group having 4 or more carbon atoms) (second alkyl acrylate).

The number of carbon atoms of the alkyl group in the first alkyl acrylate may be 1 or more, may be 2 or less, or may be 2. The first alkyl acrylate is preferably ethyl acrylate. The number of carbon atoms of the alkyl group in the second alkyl acrylate may be 8 or less, 6 or less, or 5 or less, or may be 4. The second alkyl acrylate is preferably n-butyl acrylate.

The content of the first alkyl acrylate, based on the total mass of the acrylic monomer, may be 10 mass% or more, 20 mass% or more, or 30 mass% or more, and may be 70 mass% or less, 60 mass% or less, or 50 mass% or less.

The content of the second alkyl acrylate, based on the total mass of the acrylic monomer, may be 20 mass% or more, 30 mass% or more, or 40 mass% or more, and may be 70 mass% or less, 60 mass% or less, or 50 mass% or less.

Alkyl methacrylate is represented by formula (2). 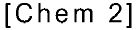 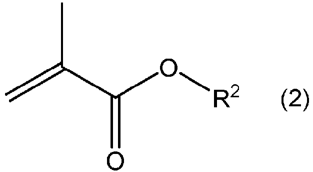 wherein R² represents an alkyl group.

The alkyl group (R²) in the alkyl methacrylate may be linear or branched. The number of carbon atoms of the alkyl group (R²) in the alkyl methacrylate may be 1 or more and may be 4 or less, and is preferably 2 or more or 3 or more, and may be 3. Specific examples of alkyl methacrylate include methyl methacrylate, ethyl methacrylate, n-propyl methacrylate, isopropyl methacrylate, n-butyl methacrylate, and isobutyl methacrylate. These alkyl methacrylates may be used alone or in combination of two or more thereof. The alkyl methacrylate is preferably n-butyl methacrylate.

The content of alkyl methacrylate (preferably alkyl methacrylate having an alkyl group with 3 or more carbon atoms), based on the total mass of the acrylic monomer, may be 3 mass% or more, 5 mass% or more, or 7 mass% or more, and may be 40 mass% or less, 35 mass% or less, 30 mass% or less, 25 mass% or less, 20 mass% or less, 15 mass% or less, or 13 mass% or less.

Alkoxyalkyl acrylate is represented by the following formula (3): 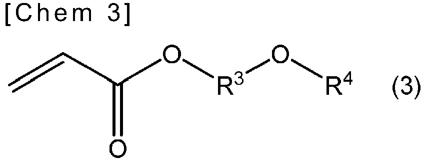 wherein R³ represents an alkylene group and R⁴ represents an alkyl group.

The alkylene group (R³) and alkyl group (R⁴) in the alkoxyalkyl acrylate may be linear or branched, respectively. The number of carbon atoms of the alkylene group (R³) in alkoxyalkyl acrylate may be 1 or more or 2 or more, and may be 4 or less or 3 or less. The number of carbon atoms of the alkyl group (R⁴) in the alkoxyalkyl acrylate may be 1 or more and may be 4 or less, 3 or less, or 2 or less.

Specific examples of alkoxyalkyl acrylate include 2-methoxyethyl acrylate, 2-ethoxyethyl acrylate, 2-(n-propoxy)ethyl acrylate, 2-(n-butoxy)ethyl acrylate, 3-methoxypropyl acrylate, 3-ethoxypropyl acrylate, 2-(n-propoxy)propyl acrylate, and 2-(n-butoxy)propyl acrylate. These alkoxyalkyl acrylates may be used alone or in combination of two or more thereof.

The content of the alkoxyalkyl acrylate, based on the total mass of the acrylic monomer, may be 5 mass% or more, 10 mass% or more, or 12 mass% or more, and may be 30 mass% or less, 25 mass% or less, or 20 mass% or less.

The acrylic monomer may further include a crosslink-site monomer. The crosslink-site monomer is a monomer that is copolymerizable with alkyl acrylate (and further with alkyl methacrylate and alkoxyalkyl acrylate) and has a crosslinkable group that forms a crosslink site (also referred to as a crosslink point). The crosslink-site monomer has a polymerizable carbon-carbon double bond, and includes, for example, an acryloyl group, a methacryloyl group, an allyl group, a methallyl group, a vinyl group, or an alkenylene group. Examples of the crosslinkable group include a carboxyl group, an epoxy group, and an active chlorine group. The crosslink-site monomer may have one or two or more of these functional groups.

Examples of the crosslink-site monomer having a carboxyl group as the crosslinkable group include acrylic acid, methacrylic acid, crotonic acid, 2-pentenoic acid, maleic acid, fumaric acid, itaconic acid, and monoalkyl maleate.

Examples of the crosslink-site monomer having an epoxy group as the crosslinkable group include glycidyl acrylate, glycidyl methacrylate, allyl glycidyl ether, and methallyl glycidyl ether.

Examples of the crosslink-site monomer having an active chlorine group as the crosslinkable group include 2-chloroethyl vinyl ether, 2-chloroethyl acrylate, vinylbenzyl chloride, vinyl chloroacetate, and allyl chloroacetate.

The content of the crosslink-site monomer, based on the total mass of the acrylic monomer, may be 0.5 mass% or more, 1 mass% or more, or 1.2 mass% or more, and may be 8 mass% or less, 5 mass% or less, or 3 mass% or less.

The acrylic monomer may further include another monomer copolymerizable with the above-described monomers. Examples of such another monomer include ethylene, alkoxyalkyl methacrylate, alkyl vinyl ketone, vinyl ether, allyl ether, a vinyl aromatic compound, vinyl nitrile, dialkyl maleate, dialkyl fumarate, dialkyl itaconate, dialkyl citraconate, dialkyl mesaconate, dialkyl 2-pentenedioate, and dialkyl acetylenedicarboxylate.

The nonionic emulsifier may include at least one selected from the group consisting of an ether-based nonionic emulsifier, an ester-based nonionic emulsifier, an ether-ester-based nonionic emulsifier, a nitrogen-containing nonionic emulsifier, and a polyvinyl alcohol-based emulsifier.

Examples of the ether-based nonionic emulsifier include polyoxyethylene alkyl ether, polyoxyethylene alkylaryl ether, polyoxyalkylene alkyl ether, polyoxyethylene alkenyl ether, polyoxyethylene alkylphenol ether, a polyoxyethylene-polyoxypropylene copolymer, polyoxyethylene lauryl glycol, and polyoxypropylene glycol. The ether-based nonionic emulsifier preferably includes polyoxyethylene alkyl ether. The number of carbon atoms of the alkyl group in polyoxyethylene alkyl ether may be 1 or more and may be 15 or less. The molecular weight of the polyoxyethylene alkyl ether may be 1,000 or more and may be 2,000 or less.

Examples of the ester-based nonionic emulsifier include sorbitan fatty acid ester and glycerin fatty acid ester. The sorbitan fatty acid ester may be, for example, a monoester. The glycerin fatty acid ester may be, for example, a monoester, and may be a diester.

Examples of the ether-ester-based nonionic emulsifier include polyoxyethylene fatty acid ester and polyoxyethylene sorbitan fatty acid ester. The polyoxyethylene fatty acid ester may be, for example, a monoester, and may be a diester. The polyoxyethylene sorbitan fatty acid ester may be, for example, a monoester.

Examples of the nitrogen-containing nonionic emulsifier include polyoxyethylene alkylamine, polyoxyethylene fatty acid monoethanolamide, and fatty acid diethanolamide.

The polyvinyl alcohol-based emulsifier may be a fully saponified polyvinyl alcohol or a partially saponified polyvinyl alcohol, and is preferably a partially saponified polyvinyl alcohol. The degree of saponification of polyvinyl alcohol may be 60 mol% or more, 70 mol% or more, or 80 mol% or more, and may be 100 mol% or less, 99 mol% or less, or 90 mol% or less. The degree of saponification of polyvinyl alcohol means a value measured in accordance with JIS K 6726, "3.5 Degree of Saponification."

The amount of the nonionic emulsifier added, based on 100 parts by mass of the total mass of the acrylic monomer, may be 1 part by mass or more, 1.5 parts by mass or more, 2 parts by mass or more, 2.5 parts by mass or more, 3 parts by mass or more, 3.5 parts by mass or more, 4 parts by mass or more, or 4.5 parts by mass or more. From the viewpoint of further improving water resistance of a crosslinked product, reducing the toluene-insoluble fraction of acrylic rubber, and improving flex fatigue resistance of the crosslinked product, the amount of the nonionic emulsifier added, based on 100 parts by mass of the total mass of the acrylic monomer, is preferably 10 parts by mass or less, 9 parts by mass or less, 8 parts by mass or less, 7 parts by mass or less, 6 parts by mass or less, or 5 parts by mass or less.

In one embodiment, an anionic emulsifier may be used in addition to the nonionic emulsifier. That is, in step S1, an acrylic monomer may be polymerized in the presence of a nonionic emulsifier and an anionic emulsifier to obtain a latex of an acrylic polymer. The anionic emulsifier may be a known anionic emulsifier, such as sodium lauryl sulfate. In this case, a mass ratio of nonionic emulsifier/anionic emulsifier may be 6/4 or more and may be 8/2 or less.

The polymerization initiator may be, for example, an azo compound such as azobisisobutyronitrile, an organic peroxide such as tert-butyl hydroperoxide, cumene hydroperoxide, or benzoyl peroxide, or an inorganic peroxide such as sodium persulfate or ammonium persulfate, and is preferably tert-butyl hydroperoxide.

When polymerizing an acrylic monomer, a pH adjuster may further be used. The pH adjuster may be, for example, an alkali metal salt such as sodium acetate, sodium hydroxide, potassium hydroxide, sodium phosphate, or sodium citrate, and is preferably sodium acetate. The amount of the pH adjuster added, based on 100 parts by mass of the total amount of monomers, may be, for example, 0.1 part by mass or more and may be 5 parts by mass or less.

The acrylic polymer in the latex obtained in step S1 may contain the above-described acrylic monomer as monomer units. That is, the acrylic polymer may contain at least one monomer unit selected from the group consisting of an alkyl acrylate, an alkyl methacrylate, and an alkoxyalkyl acrylate.

In this latex, more than 0 mass% and 70 mass% or less of the total mass of the nonionic emulsifier is bound to the acrylic polymer. In the present specification, the amount of the nonionic emulsifier bound to the acrylic polymer is determined by subtracting, from the total amount (charged amount) of the nonionic emulsifier in the latex, the amount of the nonionic emulsifier not bound to the acrylic polymer. The amount of the nonionic emulsifier not bound to the acrylic polymer is defined as the amount of the nonionic emulsifier contained in the supernatant after centrifuging the latex under conditions of 10,000 rpm × 30 minutes using a centrifuge and separating precipitated solids. The amount of the nonionic emulsifier contained in the supernatant is measured by a method appropriately selected depending on the type of the nonionic emulsifier. For example, when the nonionic emulsifier is polyvinyl alcohol, the amount of polyvinyl alcohol contained in the supernatant is measured by the method described in Examples.

That is, in the present specification, a nonionic emulsifier bound to an acrylic polymer is defined as a nonionic emulsifier contained in precipitated solids when a latex is centrifuged under conditions of 10,000 rpm × 30 minutes (i.e., nonionic emulsifier not detached from the acrylic polymer). A nonionic emulsifier bound to an acrylic polymer may be chemically bonded to the acrylic polymer, or may be physically bound (adsorbed) thereto. In addition, in the present specification, a nonionic emulsifier not bound to an acrylic polymer is defined as a nonionic emulsifier contained in a supernatant when a latex is centrifuged under conditions of 10,000 rpm × 30 minutes (i.e., nonionic emulsifier detached from the acrylic polymer).

From the viewpoint of further improving tensile strength at break of the crosslinked product and improving copper resistance of the crosslinked product, the lower limit of the amount of a nonionic emulsifier bound to the acrylic polymer, based on the total mass of the nonionic emulsifier, may be preferably 0.1 mass% or more, 0.5 mass% or more, 1 mass% or more, 1.5 mass% or more, 2 mass% or more, 3 mass% or more, 4 mass% or more, 5 mass% or more, 6 mass% or more, 7 mass% or more, 8 mass% or more, 9 mass% or more, 10 mass% or more, 12 mass% or more, 14 mass% or more, 16 mass% or more, 18 mass% or more, 20 mass% or more, 25 mass% or more, 30 mass% or more, 40 mass% or more, or 45 mass% or more. From the viewpoint of further improving water resistance of the crosslinked product, reducing the toluene-insoluble fraction of acrylic rubber, and improving flex fatigue resistance of the crosslinked product, the upper limit of the amount of a nonionic emulsifier bound to the acrylic polymer, based on the total mass of the nonionic emulsifier, may be preferably 68 mass% or less, 65 mass% or less, 60 mass% or less, 55 mass% or less, 50 mass% or less, 40 mass% or less, 30 mass% or less, 25 mass% or less, 20 mass% or less, 15 mass% or less, or 10 mass% or less.

From the viewpoint of further improving water resistance of the crosslinked product, reducing the toluene-insoluble fraction of acrylic rubber, and improving flex fatigue resistance of the crosslinked product, the amount of a nonionic emulsifier not bound to the acrylic polymer, based on the total mass of the nonionic emulsifier, may be preferably 30 mass% or more, 32 mass% or more, 35 mass% or more, 40 mass% or more, 45 mass% or more, 50 mass% or more, 60 mass% or more, 70 mass% or more, 75 mass% or more, 80 mass% or more, 85 mass% or more, or 90 mass% or more. From the viewpoint of further improving tensile strength at break of the crosslinked product and improving copper resistance of the crosslinked product, the amount of a nonionic emulsifier not bound to the acrylic polymer, based on the total mass of the nonionic emulsifier, may be preferably less than 100 mass%, 99.9 mass% or less, 99.5 mass% or less, 99 mass% or less, 98.5 mass% or less, 98 mass% or less, 97 mass% or less, 96 mass% or less, 95 mass% or less, 94 mass% or less, 93 mass% or less, 92 mass% or less, 91 mass% or less, 90 mass% or less, 88 mass% or less, 86 mass% or less, 84 mass% or less, 82 mass% or less, 80 mass% or less, 75 mass% or less, 70 mass% or less, 60 mass% or less, or 55 mass% or less.

The total mass of the nonionic emulsifier in the latex, based on 100 parts by mass of the total mass of the acrylic polymer, may be 1 part by mass or more, 1.5 parts by mass or more, 2 parts by mass or more, 2.5 parts by mass or more, 3 parts by mass or more, 3.5 parts by mass or more, 4 parts by mass or more, or 4.5 parts by mass or more. From the viewpoint of further improving water resistance of the crosslinked product, reducing the toluene-insoluble fraction of acrylic rubber, and improving flex fatigue resistance of the crosslinked product, the total mass of the nonionic emulsifier in the latex, based on 100 parts by mass of the total mass of the acrylic polymer, may be preferably 10 parts by mass or less, 9 parts by mass or less, 8 parts by mass or less, 7 parts by mass or less, 6 parts by mass or less, or 5 parts by mass or less.

In order that a specific amount of the nonionic emulsifier in the latex is bound to the acrylic polymer and that a specific amount of the nonionic emulsifier in the rubber composition described later is bound to the acrylic rubber, it is important in step S1 that a monomer mixture liquid containing an acrylic monomer and a polymerization initiator be separately added to a suspension of the nonionic emulsifier, that the amount of the polymerization initiator added be adjusted within a specific range, and that the temperature during polymerization (polymerization temperature) be adjusted within a specific range.

Specifically, for example, the larger the amount of the polymerization initiator added, the greater the amount of the nonionic emulsifier bound to the acrylic polymer in the latex and the amount of the nonionic emulsifier bound to the acrylic rubber in the rubber composition tend to be. Thus, it is necessary to adjust the amount of the polymerization initiator added in consideration of such a tendency. In addition, the higher the polymerization temperature, the greater the amount of the nonionic emulsifier bound to the acrylic polymer in the latex and the amount of the nonionic emulsifier bound to the acrylic rubber in the rubber composition tend to be. Thus, it is necessary to adjust the polymerization temperature in consideration of such a tendency.

Furthermore, in step S1, the amount of the nonionic emulsifier bound to the acrylic polymer, and the amount of the nonionic emulsifier bound to the acrylic rubber in the rubber composition, can also be adjusted by increasing or decreasing the amount of the acrylic monomer added at an early stage of polymerization and/or by adjusting the polymerization time. Specifically, for example, even when the total amount of the acrylic monomer added is the same, if the addition amount (addition rate) of the acrylic monomer is changed in two stages such that the addition amount of the acrylic monomer in a first half is relatively decreased and such that the addition amount of the acrylic monomer in a second half is relatively increased, the amount of the nonionic emulsifier bound to the acrylic polymer and the amount of the nonionic emulsifier bound to the acrylic rubber in the rubber composition tend to decrease.

Subsequently, in step S2, a coagulant is added to the latex obtained in step S1 to coagulate the acrylic polymer. Examples of the coagulant include ammonium salts, mono- to trivalent metal salts, inorganic acids, and organic acids. Examples of the ammonium salts include ammonium borate, ammonium sulfate, and ammonium chloride. Examples of the mono- to trivalent metal salts include sodium salts, magnesium salts, calcium salts, aluminum salts, and zinc salts. Examples of the sodium salts include sodium borate, sodium sulfate, and sodium chloride. Examples of the magnesium salts include magnesium sulfate, magnesium chloride, and magnesium nitrate. Examples of the calcium salts include calcium sulfate, calcium chloride, and calcium nitrate. Examples of the aluminum salts include aluminum sulfate and aluminum chloride. Examples of the zinc salts include zinc chloride and zinc acetate. Examples of the inorganic acids include hydrochloric acid, sulfuric acid, and nitric acid. Examples of the organic acids include formic acid and acetic acid.

The amount of the coagulant added, based on 100 parts by mass of the total mass of the acrylic polymer, may be 0.5 parts by mass or more, 1 part by mass or more, or 2 parts by mass or more, and may be 150 parts by mass or less, 50 parts by mass or less, or 20 parts by mass or less.

In step S2, the coagulated acrylic polymer is then washed with water and dried. During water washing, a portion of the nonionic emulsifier not bound to the acrylic polymer in the latex (i.e., a nonionic emulsifier that is detached by water washing, without the above-described centrifugation) is removed. Therefore, through step S2, in the resulting acrylic rubber (rubber composition), the amount of the nonionic emulsifier not bound to the acrylic rubber can be smaller than the amount of the nonionic emulsifier not bound to the acrylic polymer in the latex.

By the above production method, acrylic rubber coexisting with a nonionic emulsifier (a rubber composition containing acrylic rubber and a nonionic emulsifier) is obtained. That is, another embodiment of the present invention is a rubber composition containing acrylic rubber and a nonionic emulsifier. When an anionic emulsifier is used in the above-described step S1, the rubber composition may further contain an anionic emulsifier.

The acrylic rubber may contain the above-described acrylic monomer as monomer units. That is, the acrylic polymer may contain at least one monomer unit selected from the group consisting of an alkyl acrylate, an alkyl methacrylate, and an alkoxyalkyl acrylate. The acrylic rubber may further contain a crosslink-site monomer as monomer units, and may further contain another monomer as monomer units.

The nonionic emulsifier contained in the rubber composition may be derived from the nonionic emulsifier used in the above-described step S1. Details of the nonionic emulsifier are as described above. In the rubber composition, more than 0 mass% and 80 mass% or less of the total mass of the nonionic emulsifier is bound to the acrylic rubber.

In the present specification, the amount of the nonionic emulsifier bound to the acrylic rubber is determined by subtracting, from the total amount (charged amount) of the nonionic emulsifier, the amount of the nonionic emulsifier not bound to the acrylic rubber (and further, when the acrylic rubber is washed, the amount of the nonionic emulsifier removed by the washing). The amount of the nonionic emulsifier not bound to the acrylic rubber is defined as the amount of the nonionic emulsifier contained in the supernatant after centrifuging a solution in which the acrylic rubber is dissolved (see the Examples for details) under conditions of 10,000 rpm × 30 minutes using a centrifuge. The amount of the nonionic emulsifier contained in the supernatant is measured by a method appropriately selected depending on the type of the nonionic emulsifier. For example, when the nonionic emulsifier is polyvinyl alcohol, the amount of polyvinyl alcohol contained in the supernatant is measured by the method described in the Examples.

That is, in the present specification, a nonionic emulsifier bound to an acrylic rubber is defined as a nonionic emulsifier contained in precipitated solids when a solution of the acrylic rubber is centrifuged under conditions of 10,000 rpm × 30 minutes (i.e., a nonionic emulsifier not detached from the acrylic rubber). A nonionic emulsifier bound to an acrylic rubber may be chemically bonded to the acrylic rubber, or may be physically bound (adsorbed) thereto. In addition, in the present specification, the nonionic emulsifier not bound to the acrylic rubber is defined as the nonionic emulsifier contained in the supernatant when the solution of the acrylic rubber is centrifuged under conditions of 10,000 rpm × 30 minutes (i.e., a nonionic emulsifier detached from the acrylic rubber).

From the viewpoint of further improving tensile strength at break of the crosslinked product and improving copper resistance of the crosslinked product, the lower limit of the amount of a nonionic emulsifier bound to the acrylic rubber, based on the total mass of the nonionic emulsifier, may be preferably 0.1 mass% or more, 0.5 mass% or more, 1 mass% or more, 1.5 mass% or more, 2 mass% or more, 3 mass% or more, 4 mass% or more, 5 mass% or more, 6 mass% or more, 7 mass% or more, 8 mass% or more, 9 mass% or more, 10 mass% or more, 12 mass% or more, 14 mass% or more, 16 mass% or more, 18 mass% or more, 20 mass% or more, 25 mass% or more, 30 mass% or more, 40 mass% or more, 45 mass% or more, or 50 mass% or more. From the viewpoint of further improving water resistance of the crosslinked product, reducing the toluene-insoluble fraction of acrylic rubber, and improving flex fatigue resistance of the crosslinked product, the upper limit of the amount of a nonionic emulsifier bound to the acrylic rubber, based on the total mass of the nonionic emulsifier, may be preferably 75 mass% or less, 70 mass% or less, 68 mass% or less, 65 mass% or less, 60 mass% or less, 55 mass% or less, 50 mass% or less, 40 mass% or less, 30 mass% or less, 25 mass% or less, 20 mass% or less, or 15 mass% or less.

From the viewpoint of further improving water resistance of the crosslinked product, reducing the toluene-insoluble fraction of acrylic rubber, and improving flex fatigue resistance of the crosslinked product, the amount of a nonionic emulsifier not bound to the acrylic rubber, based on the total mass of the nonionic emulsifier, may be preferably 20 mass% or more, 25 mass% or more, 30 mass% or more, 32 mass% or more, 35 mass% or more, 40 mass% or more, 45 mass% or more, 50 mass% or more, 60 mass% or more, 70 mass% or more, 75 mass% or more, 80 mass% or more, or 85 mass% or more. From the viewpoint of further improving tensile strength at break of the crosslinked product and improving copper resistance of the crosslinked product, the amount of a nonionic emulsifier not bound to the acrylic rubber, based on the total mass of the nonionic emulsifier, may be preferably less than 100 mass%, 99.9 mass% or less, 99.5 mass% or less, 99 mass% or less, 98.5 mass% or less, 98 mass% or less, 97 mass% or less, 96 mass% or less, 95 mass% or less, 94 mass% or less, 93 mass% or less, 92 mass% or less, 91 mass% or less, 90 mass% or less, 88 mass% or less, 86 mass% or less, 84 mass% or less, 82 mass% or less, 80 mass% or less, 75 mass% or less, 70 mass% or less, 60 mass% or less, 55 mass% or less, or 50 mass% or less.

The total mass of the nonionic emulsifier in the rubber composition, based on 100 parts by mass of the total mass of the acrylic rubber, may be 0.5 parts by mass or more, 1 part by mass or more, 1.5 parts by mass or more, 2 parts by mass or more, 2.5 parts by mass or more, 3 parts by mass or more, 3.5 parts by mass or more, or 4 parts by mass or more. From the viewpoint of further improving water resistance of the crosslinked product, reducing the toluene-insoluble fraction of acrylic rubber, and improving flex fatigue resistance of the crosslinked product, the total mass of a nonionic emulsifier in the rubber composition, based on 100 parts by mass of the total mass of the acrylic rubber, may be preferably 10 parts by mass or less, 9 parts by mass or less, 8 parts by mass or less, 7 parts by mass or less, 6 parts by mass or less, 5 parts by mass or less, 4.5 parts by mass or less, or 4 parts by mass or less.

The rubber composition may further contain a crosslinking agent. The rubber composition may further contain a crosslinking accelerator. In this case, a crosslinked product can be obtained by kneading the rubber composition at a temperature equal to or lower than a crosslinking temperature and then heating the kneaded rubber composition at a predetermined crosslinking temperature. Another embodiment of the present invention is a crosslinked product of the rubber composition described above.

Heating conditions for crosslinking can be appropriately set depending on the formulation of the rubber composition and the type of the crosslinking agent. The heating temperature may be 100°C or more and may be 200°C or less. The heating time may be 1 hour or more and may be 10 hours or less. Examples of the heating method include hot-press heating, steam heating, and oven heating, which are methods used for crosslinking rubber.

Apparatuses for kneading, molding, and crosslinking the rubber composition, and apparatuses for kneading and molding the crosslinked product of the rubber composition, may be apparatuses usually used for rubber compositions. Examples of a kneading apparatus include rolls, a kneader, a Banbury mixer, an internal mixer, and a twin-screw extruder.

The crosslinking agent is not particularly limited as long as it is a crosslinking agent usually used for crosslinking acrylic rubber. For example, when the acrylic rubber contains, as monomer units, a crosslink-site monomer having a carboxyl group, the crosslinking agent is preferably a polyvalent amine compound and a carbonate of a polyvalent amine compound, and more preferably a polyvalent amine compound having 4 to 30 carbon atoms and a carbonate thereof.

Specific examples of the polyvalent amine compound include: aromatic polyamine compounds such as 4,4' -bis(4-aminophenoxy)biphenyl, 4,4' -diaminodiphenyl sulfide, 1,3-bis(4-aminophenoxy)-2,2-dimethylpropane, 1,3-bis(4-aminophenoxy)benzene, 1,4-bis(4-aminophenoxy)benzene, 1,4-bis(4-aminophenoxy)pentane, 2,2-bis[4-(4-aminophenoxy)phenyl]propane, 2,2-bis[4-(4-aminophenoxy)phenyl]sulfone, 4,4' -diaminodiphenyl sulfone, bis(4-3-aminophenoxy)phenyl sulfone, 2,2-bis[4-(4-aminophenoxy)phenyl]hexafluoropropane, 3,4' -diaminodiphenyl ether, 4,4' -diaminodiphenyl ether, 4,4' -diaminobenzanilide, and bis[4-(4-aminophenoxy)phenyl]sulfone; and aliphatic polyamine compounds such as hexamethylenediamine, hexamethylenediamine carbamate, N,N' -dicinnamylidene-1,6-hexanediamine, diethylenetriamine, triethylenetetramine, and tetraethylenepentamine.

The content of the crosslinking agent in the rubber composition, based on 100 parts by mass of the acrylic rubber, may be 0.1 parts by mass or more, 0.2 parts by mass or more, or 0.3 parts by mass or more, and may be 5 parts by mass or less, 4 parts by mass or less, or 3 parts by mass or less.

The crosslinking accelerator is not particularly limited; however, when the crosslinking agent is a polyvalent amine compound or a carbonate thereof, examples of the crosslinking accelerator include an aliphatic monovalent secondary amine compound, an aliphatic monovalent tertiary amine compound, a guanidine compound, an imidazole compound, a quaternary onium salt, a tertiary phosphine compound, an alkali metal salt of a weak acid, and a diazabicycloalkene compound. The crosslinking accelerator may be used alone or in combination of two or more thereof.

Examples of the aliphatic monovalent secondary amine compound include dimethylamine, diethylamine, di-n-propylamine, diallylamine, diisopropylamine, di-n-butylamine, di-t-butylamine, di-sec-butylamine, dihexylamine, diheptylamine, dioctylamine, dinonylamine, didecylamine, diundecylamine, didodecylamine, ditridecylamine, ditetradecylamine, dipentadecylamine, dicetylamine, di-2-ethylhexylamine, dioctadecylamine, di-cis-9-octadecenylamine, and dinonadecylamine.

Examples of the aliphatic monovalent tertiary amine compound include trimethylamine, triethylamine, tri-n-propylamine, triallylamine, triisopropylamine, tri-n-butylamine, tri-t-butylamine, tri-sec-butylamine, tripentylamine, trihexylamine, triheptylamine, trioctylamine, trinonylamine, tridecylamine, triundecylamine, tridodecylamine, tridecylamine, tritetradecylamine, tripentadecylamine, tricetylamine, tri-2-ethylhexylamine, trioctadecylamine, tri-cis-9-octadecenylamine, trinonadecylamine, N,N-dimethyldecylamine, N,N-dimethyldodecylamine, N,N-dimethyltetradecylamine, N,N-dimethylcetylamine, N,N-dimethyloctadecylamine, N,N-dimethylbehenylamine, N-methyldidecylamine, N-methyldidodecylamine, N-methylditetradecylamine, N-methyldicetylamine, N-methyldioctadecylamine, N-methyldibehenylamine, and dimethylcyclohexylamine.

Examples of the guanidine compound include 1,3-di-o-tolylguanidine and 1,3-diphenylguanidine.

Examples of the imidazole compound include 2-methylimidazole and 2-phenylimidazole.

Examples of the quaternary onium salts, without any particular limitations, include ammonium salts such as tetra-n-butylammonium chloride, trimethylphenylammonium chloride, trimethylstearylammonium chloride, trimethyllaurylammonium chloride, trimethylcetylammonium chloride, dimethyldistearylammonium chloride, tributylbenzylammonium chloride, tetra-n-butylammonium bromide, methyltriphenylammonium bromide, ethyltriphenylammonium bromide, trimethylphenylammonium bromide, trimethylbenzylammonium bromide, trimethylstearylammonium bromide, and tetrabutylammonium thiocyanate; and phosphonium salts such as tetra-n-butylphosphonium chloride, tetra-n-butylphosphonium bromide, methyltriphenylphosphonium bromide, ethyltriphenylphosphonium bromide, butyltriphenylphosphonium bromide, hexyltriphenylphosphonium bromide, benzyltriphenylphosphonium bromide, tetraphenylphosphonium chloride, tetraphenylphosphonium bromide, 4-butoxybenzyltriphenylphosphonium bromide, allyltributylphosphonium chloride, 2-propynyltriphenylphosphonium bromide, and methoxypropyltributylphosphonium chloride.

Examples of the tertiary phosphine compound include triphenylphosphine and tri-p-tolylphosphine.

Examples of the alkali metal salt of a weak acid include inorganic weak acid salts such as sodium and potassium phosphates and carbonates, and organic weak acid salts such as sodium and potassium stearates and laurates.

Examples of the diazabicycloalkene compound include 1,8-diazabicyclo[5.4.0]undec-7-ene (DBU), 1,5-diazabicyclo[4.3.0]non-5-ene (DBN), and 1,4-diazabicyclo[2.2.2]octane (DABCO). These diazabicycloalkene compounds may form salts with, for example, hydrochloric acid, sulfuric acid, carboxylic acids, sulfonic acids, and phenols. Examples of the carboxylic acids include octylic acid, oleic acid, formic acid, orthophthalic acid, and adipic acid. Examples of the sulfonic acids include benzenesulfonic acid, toluenesulfonic acid, dodecylbenzenesulfonic acid, and naphthalenesulfonic acid.

The content of the crosslinking accelerator, based on 100 parts by mass of the acrylic rubber, may be 0.1 parts by mass or more, 0.2 parts by mass or more, or 0.3 parts by mass or more, and may be 5 parts by mass or less, 4 parts by mass or less, or 3 parts by mass or less.

The rubber composition may further contain other additives. Examples of the other additives include fillers (reinforcing agents), plasticizers, lubricants, anti-aging agents, stabilizers, and silane coupling agents.

The total content of the other additives in the rubber composition, based on 100 parts by mass of acrylic rubber, may be 0.1 parts by mass or more or 0.2 parts by mass or more, and may be 90 parts by mass or less or 80 parts by mass or less.

The rubber composition described above is suitably used as a rubber composition for seals (also referred to as seal members) or for hoses (also referred to as hose members). In addition, the rubber composition can also be used as a rubber composition for anti-vibration rubber (also referred to as anti-vibration rubber members). A crosslinked product of the rubber composition described above is suitably used as a seal or a hose. That is, another embodiment of the present invention is a seal or a hose including the above-described crosslinked product. In addition, the crosslinked product can also be used as anti-vibration rubber. That is, another embodiment of the present invention is anti-vibration rubber including the above-described crosslinked product. Examples of the hose (hose member) include rubber hoses. Examples of the seal (seal member) include gaskets and packings. These members may consist only of the crosslinked product of the rubber composition, or may include the crosslinked product and other components.

Specific examples of the hose (hose member) include, for example, transmission oil cooler hoses, engine oil cooler hoses, air duct hoses, turbo intercooler hoses, hot air hoses, radiator hoses, power steering hoses, fuel system hoses, and drain system hoses for automobiles, construction machines, hydraulic equipment, and the like. The hose member may include a reinforcing yarn or wire in an intermediate layer or an outermost layer of the hose.

Specific examples of the seal (seal member) include, for example, engine head cover gaskets, oil pan gaskets, oil seals, lip seal packings, O-rings, transmission seal gaskets, crankshaft and camshaft seal gaskets, valve stem, power steering seals, belt cover seals, constant velocity joint boot materials, and rack-and-pinion boot materials.

Specific examples of the anti-vibration rubber (anti-vibration rubber member) include, for example, damper pulleys, center support cushions, and suspension bushes.

### EXAMPLES

Examples will now be described to further illustrate the present invention, but the present invention is not limited to these Examples.

### (Example 1)

A pressure-resistant reaction vessel having an internal volume of 40 liters was charged with 16.8 kg of a 4 mass% aqueous solution of a nonionic emulsifier (polyvinyl alcohol) and 22 g of sodium acetate, and the contents were thoroughly mixed in advance with a stirrer to prepare a uniform suspension. After the air in the upper space of the vessel was replaced with nitrogen, stirring was continued and the internal temperature of the vessel was maintained at 45°C. Thereafter, 11.2 kg of a monomer mixture liquid containing a (meth)acrylic monomer containing ethyl acrylate and n-butyl acrylate, and monobutyl maleate, and 2 liters of an aqueous t-butyl hydroperoxide solution (0.25 mass%) (the amount of t-butyl hydroperoxide added being about 0.045 parts by mass based on 100 parts by mass of the monomer mixture liquid) were separately pressure-fed and added to initiate polymerization. While maintaining the internal temperature of the vessel (polymerization temperature) at 45°C, the entire amounts of the monomer mixture liquid and the aqueous t-butyl hydroperoxide solution were pressure-fed at a constant rate over six hours, and the reaction was terminated 6.5 hours after initiation of polymerization. Thus, a latex containing an acrylic polymer dispersed in water and the nonionic emulsifier was obtained. To the resulting latex, 20 liters of an aqueous solution of sodium borate (3.5 mass%) was added as a coagulant to coagulate the acrylic polymer. Thereafter, the coagulated acrylic polymer was washed with water, and then dehydrated and dried to obtain acrylic rubber (a rubber composition containing acrylic rubber and the nonionic emulsifier).

The acrylic polymer and acrylic rubber described above had a monomer composition (hereinafter referred to as "monomer composition A") of 50.0 mass% ethyl acrylate, 48.5 mass% n-butyl acrylate, and 1.5 mass% monobutyl maleate.

### (Example 2)

Acrylic rubber (rubber composition) was obtained in the same manner as in Example 1, except that the amount of the aqueous t-butyl hydroperoxide solution (0.25 mass%) added was changed to 0.75 times (the amount of t-butyl hydroperoxide added being about 0.033 parts by mass based on 100 parts by mass of the monomer mixture liquid).

### (Example 3)

Acrylic rubber (rubber composition) was obtained in the same manner as in Example 1, except that the amount of the aqueous t-butyl hydroperoxide solution (0.25 mass%) added was changed to 0.75 times that (the amount of t-butyl hydroperoxide added being about 0.033 parts by mass based on 100 parts by mass of the monomer mixture liquid), and the amount of the monomer mixture liquid added at an early stage of polymerization was reduced by about 20%. More specifically, with respect to the added amount of the monomer mixture liquid, the pressure-feeding rate of the monomer mixture liquid within 2 hours from initiation of polymerization was set to about 0.8 times the pressure-feeding rate in Example 1, and the pressure-feeding rate of the monomer mixture liquid from 2 hours until the end of polymerization was adjusted such that the total amount of the monomer mixture liquid added was the same as the total amount of the monomer mixture liquid added in Example 1 (11.2 kg).

### (Example 4)

Acrylic rubber (rubber composition) was obtained in the same manner as in Example 1, except that the amount of the aqueous t-butyl hydroperoxide solution (0.25 mass%) added was changed to 0.75 times that (the amount of t-butyl hydroperoxide added being about 0.033 parts by mass based on 100 parts by mass of the monomer mixture liquid), the amount of the monomer mixture liquid added at an early stage of polymerization was reduced by about 40%, and the polymerization temperature was changed to 35°C. More specifically, with respect to the added amount of the monomer mixture liquid, the pressure-feeding rate of the monomer mixture liquid within 2 hours from initiation of polymerization was set to about 0.6 times the pressure-feeding rate in Example 1, and the pressure-feeding rate of the monomer mixture liquid from 2 hours until the end of polymerization was adjusted such that the total amount of the monomer mixture liquid added was the same as the total amount of the monomer mixture liquid added in Example 1 (11.2 kg).

### (Example 5)

Acrylic rubber (rubber composition) was obtained in the same manner as in Example 1, except that the amount of the aqueous t-butyl hydroperoxide solution (0.25 mass%) added was changed to 0.5 times (the amount of t-butyl hydroperoxide added being about 0.022 parts by mass based on 100 parts by mass of the monomer mixture liquid), the amount of the monomer mixture liquid added at an early stage of polymerization was reduced by about 75%, the polymerization temperature was changed to 35°C, and the reaction time was changed to 12 hours. More specifically, with respect to the added amount of the monomer mixture liquid, the pressure-feeding rate of the monomer mixture liquid within 4 hours from initiation of polymerization was set to about 0.25 times the pressure-feeding rate in Example 1, and the pressure-feeding rate of the monomer mixture liquid from 4 hours until the end of polymerization (12 hours after the start of polymerization) was adjusted such that the total amount of the monomer mixture liquid added was the same as the total amount of the monomer mixture liquid added in Example 1 (11.2 kg).

### (Comparative Example 1)

Acrylic rubber (rubber composition) was obtained in the same manner as in Example 1, except that the polymerization temperature was changed to 55°C.

### (Comparative Example 2)

Acrylic rubber (rubber composition) was obtained in the same manner as in Example 1, except that the amount of the aqueous t-butyl hydroperoxide solution (0.25 mass%) added was changed to 2 times that (the amount of t-butyl hydroperoxide added being about 0.089 parts by mass based on 100 parts by mass of the monomer mixture liquid), and that the polymerization temperature was changed to 55°C.

### (Comparative Example 3)

Acrylic rubber (rubber composition) was obtained in the same manner as in Example 1, except that the nonionic emulsifier was changed to an anionic emulsifier.

### (Example 6)

Acrylic rubber (rubber composition) was obtained in the same manner as in Example 2, except that the concentration of the aqueous solution of the nonionic emulsifier was changed from 4 mass% to 8 mass%.

### (Example 7)

Acrylic rubber (rubber composition) was obtained in the same manner as in Example 1, except that polyoxyethylene dodecyl ether (molecular weight: 1,500) was used as the nonionic emulsifier instead of polyvinyl alcohol.

### (Example 8)

Acrylic rubber (rubber composition) was obtained in the same manner as in Example 1, except that, instead of the nonionic emulsifier (polyvinyl alcohol), a mixture of polyoxyethylene dodecyl ether (molecular weight: 1,500), which is a nonionic emulsifier, and sodium lauryl sulfate, which is an anionic emulsifier (mass ratio of polyoxyethylene dodecyl ether/sodium lauryl sulfate = 7/3) was used, and an aqueous solution of sodium sulfate (2 mass%) was used as the coagulant.

### (Example 9)

Acrylic rubber (rubber composition) was obtained in the same manner as in Example 1, except that the blending ratio of ethyl acrylate, n-butyl acrylate, and monobutyl maleate in the monomer mixture liquid was adjusted such that the monomer composition A of the acrylic polymer and acrylic rubber was changed to monomer composition B (68.5 mass% ethyl acrylate, 30.0 mass% n-butyl acrylate, and 1.5 mass% monobutyl maleate), and the amount of an aqueous t-butyl hydroperoxide solution (0.15 mass%) added was changed to 1.8 liters (the amount of t-butyl hydroperoxide added being about 0.024 parts by mass based on 100 parts by mass of the monomer mixture liquid).

### (Example 10)

Acrylic rubber (rubber composition) was obtained in the same manner as in Example 1, except that the monomer mixture liquid was changed to a monomer mixture liquid containing ethyl acrylate, n-butyl acrylate, n-butyl methacrylate, 2-methoxyethyl acrylate, and monobutyl maleate such that the monomer composition A of the acrylic polymer and acrylic rubber was changed to monomer composition C (35.0 mass% ethyl acrylate, 39.5 mass% n-butyl acrylate, 9.5 mass% n-butyl methacrylate, 14.5 mass% 2-methoxyethyl acrylate, and 1.5 mass% monobutyl maleate), that the amount of an aqueous t-butyl hydroperoxide solution (0.25 mass%) added was changed to 1.5 liters (the amount of t-butyl hydroperoxide added being about 0.033 parts by mass based on 100 parts by mass of the monomer mixture liquid), and that the polymerization temperature was changed to 45°C.

### (Example 11)

Acrylic rubber (rubber composition) was obtained in the same manner as in Example 8, except that the amount of the aqueous t-butyl hydroperoxide solution (0.25 mass%) added was changed to 0.7 times that (the amount of t-butyl hydroperoxide added being about 0.023 parts by mass based on 100 parts by mass of the monomer mixture liquid).

### (Example 12)

Acrylic rubber (rubber composition) was obtained in the same manner as in Example 1, except that the monomer mixture liquid was changed to a monomer mixture liquid containing ethyl acrylate, n-butyl acrylate, n-butyl methacrylate, and monobutyl maleate such that the monomer composition A of the acrylic polymer and acrylic rubber was changed to monomer composition D (25.0 mass% ethyl acrylate, 43.5 mass% n-butyl acrylate, 30.0 mass% n-butyl methacrylate, and 1.5 mass% monobutyl maleate).

### (Example 13)

Acrylic rubber (rubber composition) was obtained in the same manner as in Example 1, except that the monomer mixture liquid was changed to a monomer mixture liquid containing ethyl acrylate, n-butyl acrylate, n-butyl methacrylate, and monobutyl maleate such that the monomer composition A of the acrylic polymer and acrylic rubber was changed to monomer composition E (35.0 mass% ethyl acrylate, 48.5 mass% n-butyl acrylate, 15.0 mass% n-butyl methacrylate, and 1.5 mass% monobutyl maleate).

### (Example 14)

Acrylic rubber (rubber composition) was obtained in the same manner as in Example 1, except that the monomer mixture liquid was changed to a monomer mixture liquid containing ethyl acrylate, n-butyl acrylate, 2-methoxyethyl acrylate, and monobutyl maleate such that the monomer composition A of the acrylic polymer and acrylic rubber was changed to monomer composition F (70.0 mass% ethyl acrylate, 13.5 mass% n-butyl acrylate, 15.0 mass% 2-methoxyethyl acrylate, and 1.5 mass% monobutyl maleate).

### (Example 15)

Acrylic rubber (rubber composition) was obtained in the same manner as in Example 1, except that the monomer mixture liquid was changed to a monomer mixture liquid containing ethyl acrylate, n-butyl acrylate, 2-methoxyethyl acrylate, and monobutyl maleate such that the monomer composition A of the acrylic polymer and acrylic rubber was changed to monomer composition G (5.0 mass% ethyl acrylate, 68.5 mass% n-butyl acrylate, 25.0 mass% 2-methoxyethyl acrylate, and 1.5 mass% monobutyl maleate).

Table 1 and Table 2 show, for each of the Examples and Comparative Examples: the monomer composition; the total amount of emulsifier in the latex (i.e., the total mass (parts by mass) of the nonionic emulsifier in the latex based on 100 parts by mass of the total mass of the acrylic polymer); the amount of bound emulsifier in the latex (i.e., the proportion (mass%) of the nonionic emulsifier bound to the acrylic polymer based on the total mass of the nonionic emulsifier in the latex); the total amount of the emulsifier in the rubber composition (i.e., the total mass (parts by mass) of the nonionic emulsifier in the rubber composition based on 100 parts by mass of the total mass of the acrylic rubber); and the amount of bound emulsifier in the rubber composition (i.e., the proportion (mass%) of the nonionic emulsifier bound to the acrylic rubber based on the total mass of the nonionic emulsifier in the rubber composition).

The proportion of the nonionic emulsifier bound to the acrylic polymer in the latex was measured in accordance with the following procedure.
First, 50 g of a sample obtained by diluting a latex M_{L} (kg) containing a nonionic emulsifier M_{E} (g) 20-fold with purified water was placed in a centrifuge tube, and centrifuged using a centrifuge (CT15D, Hitachi, Ltd.) under conditions of 10,000 rpm × 30 minutes. After centrifugation, the supernatant was transferred to a 100-mL plastic bottle, and the mass M_{S} (g) of the supernatant was measured. 1 mL of the supernatant liquid, 15 mL of a 4 mass% aqueous boric acid solution, and 3 mL of a 0.05 mol iodine solution were placed in a vessel and pure water was added to make up the volume to 50 mL to obtain a sample for measurement (a sample in which the latex was diluted 1,000-fold). The absorbance A_{bs} of the measurement sample at a wavelength of 650 nm was measured using a spectrophotometer.
Subsequently, the concentration C_{free} (g/kg) of the nonionic emulsifier not bound to the acrylic polymer in the latex was determined by the following equation:${C}_{free} \left(g/kg\right) = α \left(mg/L\right) \times Abs \times Ms \left(g\right) / 50 \left(g\right)$

In the above equation, conversion was performed assuming that the density of the supernatant was 1 g/mL. In addition, since the measurement sample is obtained by diluting the latex 1,000-fold, the unit of C_{free} is expressed as g/kg. In addition, the concentration coefficient α (mg/L) was determined by preparing aqueous solutions of the nonionic emulsifier (the same polyvinyl alcohol as described above) at concentrations of 2, 10, 20, 30, and 40 mg/L, preparing measurement samples in the same manner as for the supernatant, measuring absorbance at a wavelength of 650 nm, and approximating the relationship as: concentration of each aqueous solution = α × absorbance.

Then, using the above C_{free} (g/kg), the mass of the nonionic emulsifier not bound to the acrylic polymer in the latex was determined as M_{free}(g) = C_{free} (g/kg) × M_{L}(kg). Finally, the proportion (mass%) of the nonionic emulsifier bound to the acrylic polymer in the latex was determined as [M_{E}(g)-M_{free}(g)] / M_{E}(g) × 100.

The proportion of the nonionic emulsifier bound to the acrylic rubber in the rubber composition was measured in accordance with the following procedure.
First, 0.3 g of the rubber composition was prepared and accurately weighed into a 100-mL Erlenmeyer flask. About 20 mL of chloroform (CHCl₃) was added to the rubber composition, and the flask was shaken to dissolve the rubber composition. Thereafter, 10 mL of dimethyl sulfoxide (DMSO) was added, and the mixture was heated in a water bath at 90°C or higher for 1 hour. Next, 20 mL of hot water at 80°C or higher was gradually added, and the mixture was heated in a water bath for about 30 minutes to remove chloroform, followed by cooling. The cooled sample was centrifuged using a centrifuge (CT15D, Hitachi, Ltd.) under conditions of 10,000 rpm × 30 minutes. After centrifugation, the supernatant was made up to 100 mL, and then filtered through a 200-mesh wire screen to obtain a sample containing the nonionic emulsifier not bound to the acrylic rubber. For this sample, the proportion of the nonionic emulsifier not bound to the acrylic rubber in the rubber composition was determined in the same manner as described above for concentration C_{free} (g/kg) of the nonionic emulsifier not bound to the acrylic polymer in the latex. The amount of the nonionic emulsifier bound to the acrylic rubber was determined by subtracting, from the charged amount of the nonionic emulsifier, the determined amount of the nonionic emulsifier not bound to the acrylic rubber and the amount of the nonionic emulsifier removed by water washing.

Mooney viscosity ML(1+4) at 100°C of the acrylic rubber (rubber composition) obtained in each of the Examples and Comparative Examples was measured in accordance with JIS K 6300. The results are shown in Tables 1 and 2.

In addition, 100 parts by mass of the acrylic rubber (rubber composition) obtained in each of the Examples and Comparative Examples was compounded with the following components, and kneaded using an 8-inch open roll.
Filler: carbon black (SEAST SO, Tokai Carbon Co., Ltd.) 55 parts by mass
Lubricant a: stearic acid (Stearic Acid "Tsubaki" (beads), NOF Corporation) 1 part by mass
Lubricant b: stearamide (Amide AP-1, Mitsubishi Chemical Corporation) 0.3 parts by mass
Lubricant c: liquid paraffin (Hi Cold K-230, Kaneda Co., Ltd.) 1 part by mass
Mold release agent: mixture of fatty acids, fatty acid esters, amines, and wetting agents (MoldWiz INT-21G, Tomoe Engineering Co., Ltd.) 0.5 parts by mass
Anti-aging agent: 4,4' -bis(α,α-dimethylbenzyl)diphenylamine (Naugard # 445, Addivant) 0.5 parts by mass
Crosslinking agent: hexamethylenediamine carbamate (Diak #1, DuPont) 0.5 parts by mass
Crosslinking accelerator: synthetic mixture of active amines and retarder (XLA-60, LANXESS) 1.0 part by mass

After kneading, the rubber composition was sheeted to a thickness of 2.4 mm, and then heated and pressed using a press vulcanizer at 170°C and 10 MPa for 20 minutes. Subsequently, the sheet was heated in a Geer oven at 170°C for 4 hours to obtain a crosslinked product of the rubber composition.

### (Evaluation of water resistance)

In accordance with "immersion test" of JIS K 6258:2016, the crosslinked product was subjected to an immersion test in distilled water (80°C, 72 hours), and the volume change ratio of the crosslinked product before and after the test was calculated based on the following equation: 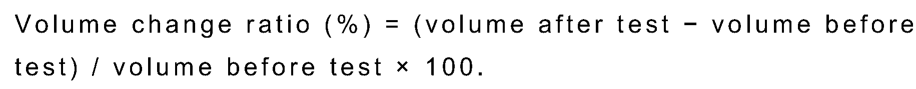 Volume change ratio (%) = (volume after test - volume before test) / volume before test × 100. The results are shown in Tables 1 and 2. A smaller volume change ratio indicates superior water resistance.

### (Measurement of tensile strength at break)

In accordance with JIS K 6251:2017, tensile strength at break Tb of the crosslinked product was measured. The results are shown in Tables 1 and 2.

**[TABLE 1]**

| | | Comparative Example 1 | Comparative Example 2 | Example 1 | Example 2 | Example 3 | Example 4 | Example 5 | Comparative Example 3 |
|---|---|---|---|---|---|---|---|---|---|
| Monomer Composition | | A | A | A | A | A | A | A | A |
| Latex | Total mass of emulsifier (parts by mass) | 4.88 | 4.88 | 4.88 | 4.88 | 4.88 | 4.88 | 4.88 | 4.88 |
| | Amount of bound emulsifier (mass%) | 74 | 80 | 60 | 40 | 20 | 10 | 1.0 | 0 |
| Rubber Composition | Total mass of emulsifier (parts by mass) | 4.32 | 4.38 | 4.28 | 4.08 | 3.68 | 3.48 | 3.28 | 3.28 |
| | Amount of bound emulsifier (mass%) | 82 | 89 | 68 | 48 | 27 | 14 | 1.5 | 0 |
| Mooney viscosity | | 40 | 40 | 40 | 40 | 40 | 40 | 40 | 40 |
| Water resistance (%) | | 14.3 | 17.6 | 9.6 | 8.8 | 5.7 | 3.5 | 3.2 | 3.0 |
| Tensile strength at break Tb (MPa) | | 12.1 | 12.7 | 11.4 | 11.1 | 10.9 | 10.6 | 10.2 | 10.0 |

**[TABLE 2]**

| | | Example 6 | Example 7 | Example 8 | Example 9 | Example 10 | Example 11 | Example 12 | Example 13 | Example 14 | Example 15 |
|---|---|---|---|---|---|---|---|---|---|---|---|
| Monomer Composition | | A | A | A | B | C | C | D | E | F | G |
| Latex | Total mass of emulsifier (parts by mass) | 8.00 | 4.88 | 4.88 | 4.88 | 4.88 | 4.88 | 4.88 | 4.88 | 4.88 | 4.88 |
| | Amount of bound emulsifier (mass%) | 40 | 1.0 | 0.7 | 34 | 48 | 20 | 30 | 35 | 20 | 45 |
| Rubber Composition | Total mass of emulsifier (parts by mass) | 7.20 | 3.28 | 2.80 | 3.90 | 4.28 | 3.88 | 3.88 | 3.68 | 3.48 | 4.48 |
| | Amount of bound emulsifier (mass%) | 44 | 1.5 | 1.1 | 43 | 55 | 25 | 38 | 46 | 28 | 49 |
| Mooney viscosity | | 36 | 40 | 40 | 46 | 38 | 38 | 45 | 43 | 45 | 30 |
| Water resistance (%) | | 14.4 | 1.5 | 1.0 | 6.6 | 9.8 | 8.8 | 8.2 | 8.5 | 9.6 | 11.0 |
| Tensile strength at break Tb (MPa) | | 12.8 | 10.1 | 10.0 | 12.4 | 11.4 | 10.4 | 12.0 | 11.0 | 10.0 | 9.1 |

For Examples 1 to 15, evaluation of the toluene-insoluble fraction, flex fatigue resistance, and copper resistance was also conducted as described below. The results are shown in Tables 3 to 5.

### (Measurement of toluene-insoluble fraction)

One gram of acrylic rubber was accurately weighed and dissolved in 100 mL of toluene at 25°C for 48 hours. The resulting solution was transferred to a 250-mL centrifuge tube whose mass had been measured in advance (denoted as X (g)). Subsequently, the solution was centrifuged using an angle rotor having a maximum centrifugal radius of 13.8 cm at conditions of 10°C and 8,500 rpm for 60 minutes, and the non-precipitated matter was subsequently removed by decantation. The precipitate in the centrifuge tube was dried in a vacuum dryer at 70°C for 24 hours, and the mass of the centrifuge tube after drying (denoted as Y (g)) was measured. The toluene-insoluble fraction was calculated from the measured X and Y according to the following equation: $Toluene - insoluble fraction \left(mass%\right) = \left(Y-X\right) \times 100$ A smaller toluene-insoluble fraction is preferred.

### (Evaluation of flex fatigue resistance)

In accordance with JIS K 6260:2010, the number of flex cycles until a crack of 0.5 mm occurred in the crosslinked product was measured under an environment of 100°C. The number of flex cycles was taken as an average value obtained by performing the same measurement on five samples. A larger number of flex cycles indicates superior flex fatigue resistance.

### (Evaluation of copper resistance)

A No. 3 dumbbell-shaped crosslinked product was used as a test specimen. Five grams of a slurry prepared by mixing engine oil (Mobil 15W-30, EMG Lubricants Godo Kaisha) and copper powder (CE-1110, Fukuda Metal Foil & Powder Co., Ltd.) at an engine oil/copper powder at a proportion (mass ratio) of 3/1 was applied with a brush so as to completely cover the gauge length of the test specimen, and the sample was dried at room temperature for 12 hours. Subsequently, a copper resistance test was performed by heating the sample in a Geer oven at 150°C for 500 hours. Thereafter, the copper paste was removed from the specimen using a spatula, and elongation of the specimen was measured in accordance with JIS K 6251:2010. The elongation change ratio (%) before and after the test was calculated according to the following equation: 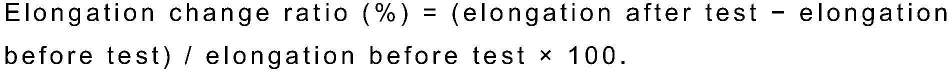 Elongation change ratio (%) = (elongation after test - elongation before test) / elongation before test × 100. A smaller absolute value of the elongation change ratio indicates superior copper resistance.

**[TABLE 3]**

| | Example 1 | Example 2 | Example 3 | Example 4 | Example 5 |
|---|---|---|---|---|---|
| Toluene-insoluble fraction (%) | 40 | 25 | 12 | 5 | 1.5 |
| Flex fatigue resistance (10,000 times) | 1.0 | 2.1 | 4.6 | 5.9 | 7.5 |
| Copper resistance (%) | -30 | -34 | -38 | -43 | -45 |

**[TABLE 4]**

| | Example 6 | Example 7 | Example 8 | Example 9 | Example 10 |
|---|---|---|---|---|---|
| Toluene-insoluble fraction (%) | 58 | <1.5 | <1.5 | 20 | 28 |
| Flex fatigue resistance (10,000 times) | 0.4 | 7.6 | 7.2 | 3.0 | 1.5 |
| Copper resistance (%) | -29 | -70 | -75 | -33 | -44 |

**[TABLE 5]**

| | Example 11 | Example 12 | Example 13 | Example 14 | Example 15 |
|---|---|---|---|---|---|
| Toluene-insoluble fraction (%) | 15 | 30 | 25 | 15 | 45 |
| Flex fatigue resistance (10,000 times) | 4.2 | 1.8 | 2.0 | 4.5 | 0.8 |
| Copper resistance (%) | -50 | -70 | -50 | -25 | -30 |

## Claims

1. A rubber composition comprising acrylic rubber and a nonionic emulsifier, wherein
more than 0 mass% and 80 mass% or less of a total mass of the nonionic emulsifier is bound to the acrylic rubber.

2. The rubber composition according to claim 1, wherein the total mass of the nonionic emulsifier is 5 parts by mass or less based on 100 parts by mass of a total mass of the acrylic rubber.

3. The rubber composition according to claim 1, wherein the acrylic rubber includes at least one monomer unit selected from the group consisting of an alkyl acrylate, an alkyl methacrylate, and an alkoxyalkyl acrylate.

4. The rubber composition according to any one of claims 1 to 3, further comprising a crosslinking agent.

5. A crosslinked product of the rubber composition according to claim 4.

6. A method for producing acrylic rubber, the method comprising:
obtaining a latex of an acrylic polymer by polymerizing an acrylic monomer in the presence of a nonionic emulsifier; and
coagulating the acrylic polymer and washing to obtain acrylic rubber,
wherein more than 0 mass% and 70 mass% or less of the total mass of the nonionic emulsifier in the latex is bound to the acrylic polymer.

7. The method for producing acrylic rubber according to claim 6, wherein the total mass of the nonionic emulsifier in the latex is 6 parts by mass or less based on 100 parts by mass of the total mass of the acrylic polymer.

8. The method for producing acrylic rubber according to claim 6 or 7, wherein the acrylic polymer includes at least one monomer unit selected from the group consisting of an alkyl acrylate, an alkyl methacrylate, and an alkoxyalkyl acrylate.
